# EUROPÄISCHE PATENTSCHRIFT

(11) **EP 0 711 396 B1**
(45) Veröffentlichungstag und Bekanntmachung des Hinweises auf die Patenterteilung: **12.04.2000**
(21) Anmeldenummer: 95921786.0
(22) Anmeldetag: 30.05.1995
(51) Int. Cl.: F27B 7/38, F27D 9/00, F27D 15/02, C04B 7/47

(54) **ROSTKÜHLER FÜR BRENNGUT UND VERFAHREN ZUM BETRIEB DESSELBEN**
ROASTED CHARGE COOLER AND METHOD OF OPERATION THEREOF
REFROIDISSEUR DE CHARGE DE GRILLAGE ET SON PROCEDE DE FONCTIONNEMENT

(30) Priorität: 30.05.1994 DE 4418885
(43) Veröffentlichungstag der Anmeldung: 15.05.1996
(73) Patentinhaber: BMH Claudius Peters GmbH, 21614 Buxtehude (DE)
(72) Erfinder: KLINTWORTH, Klaus, D-21614 Buxtehude (DE); HARDER, Joachim, D-21614 Buxtehude (DE)
(74) Vertreter: Glawe, Delfs, Moll & Partner
(86) Internationale Anmeldenummer: EP9502060
(87) Internationale Veröffentlichungsnummer: WO9533172

(56) Entgegenhaltungen:
- DE-C- 3 521 586
- FR-A- 943 473
- FR-A- 2 102 623
- FR-A- 2 286 802
- US-A- 3 162 431

## Beschreibung

Bei Rostkühlern für Brenngut, insbesondere für die Kühlung von Zementklinker, bildet das aus dem zugehörigen Ofen abgeworfene Brenngut auf dem Kühlerrost ein Bett, das von Kühlluft durchströmt wird, die dabei Wärme und Staub aufnimmt. Ein Teil der Kühlluft wird über einen Wärmetauscher in den Kühler zurückgeführt. Ein anderer Teil wird dem Ofen als Sekundärluft für den Brennvorgang zugeführt. Die fehlende Luftmenge wird dem Kühler als Frischluft zugeleitet. Im Idealfall kann ein solcher Kühler abluftfrei betrieben werden, d.h. daß keine Abluft unmittelbar in die Atmosphäre geführt wird. In der Praxis hat sich dieses Ziel bislang nicht erreichen lassen, weil bei bestimmten Unregelmäßigkeiten des Ofenbetriebs kurzzeitig eine große Brenngutmenge im Kühler anfallen kann, durch die die Sekundärlufttemperatur und -menge und damit der Druck im Ofenkopf stark ansteigt. Während unter normalen Betriebsverhältnissen der Ofenkopfdruck durch Regelung der dem Kühler zugeführten Kühlluftmenge geregelt werden kann, läßt sich bei plötzlichem Anfall größerer Brenngutmengen die Kühlluftmenge nicht genügend reduzieren, weil eine bestimmte minimale Kühlluftmenge erforderlich ist, um Hitzeschäden am Kühler vorzubeugen. Eine Regelung des Ofenkopfdrucks durch Regelung des Abzugs vom Ofen für den Fall instationärer Zustände ist zwar diskutiert worden, wegen der langen Totzeit aber unbrauchbar. Man hat sich deshalb beholfen mit der Einrichtung eines Notkamins, mittels dessen in irregulären Zuständen Abluft aus dem Kühler abgezogen wird, was aber dem Sinn eines abluftfreien Systems widerspricht. Ferner wurden Umluftverfahren entwickelt, die ihre Grenze aber in der aufzuwendenden Zusatzenergie finden.

Es ist in diesem Zusammenhang zu bedenken, daß Abhilfe vor allem deshalb schwierig ist, weil Ofen und Kühler regelungstechnisch ein schwingungsfähiges System darstellen. Ein erhöhter Brenngutanfall im Kühler bewirkt eine Erhöhung der Sekundärlufttemperatur. Diese führt zu Temperaturerhöhung im Ofen und damit zur Bildung eines höheren Schmelzphasenanteils in der Sinterzone. Dies hat einen vorübergehend verringerten Brenngutaustrag aus dem Ofen zur Folge, wodurch die Sekundärlufttemperatur und damit der Schmelzphasenanteil des Klinkers wieder abnimmt. Das bewirkt erneut einen Anstieg des Materialausstrags und den Beginn eines neuen Zyklus. So schwankte in einem Beispielsfall die Sekundärlufttemperatur zwischen etwa 700°C und 850°C und der Ofenantriebsstrom (als Maß für die Ofenfüllung) zwischen etwa 180 und 250 Ampere gegensinnig mit einer Schwingungsperiode von etwa 2 Stunden. Der Anstieg der Sekundärlufttemperatur und der Abfall der Ofenantriebsleistung vollzogen sich dabei meist schlagartig innerhalb weniger Minuten.

Man hat versucht, den Energiestrom mittels einer veränderlichen Zusatzfeuerung zu vergleichmäßigen; jedoch ist dies zu verwerfen, weil dadurch die Rekuperation des Kühlers leidet; denn die Sekundärlufttemperatur müßte dann selbst im stationären Zustand dauernd abgesenkt werden.

Es ist auch bekannt (FR-B 2 102 623), die Temperatur der dem Ofen zuzuführenden Sekundärluft dadurch einzustellen, daß den ersten Kühlerabschnitten, aus denen die Sekundärluft als Abluft stammt, aus zwei unterschiedlichen Quellen Kühlluft unterschiedlicher Temperatur zugeführt wird. Durch geeignete Bestimmung des Verhältnisses der beiden zuzuführenden Luftmengen läßt sich die Sekundärluft in gewissen Grenzen beeinflussen. Diese Beeinflussung vollzieht sich jedoch sehr langsam und ist zu schwach für eine angemessen rasche Reaktion auf einen irregulär starken Ofenabwurf. Auch ist der apparative Aufwand für die Bereitstellung von zwei Luftversorgungsquellen unterschiedlicher Temperatur sehr hoch.

Der Erfindung liegt die Aufgabe zugrunde, bei einem höheren Brenngutanfall der Entstehung eines instationären Zustands entgegenzuwirken und den Kühler- und Ofenbetrieb zu stabilisieren.

Die erfindungsgemäße Lösung besteht in den Merkmalen der Ansprüche 1 bzw. 5 sowie zweckmäßigerweise den Merkmalen der übrigen Ansprüche.

Die Erfindung sieht vor, daß in die dem Ofen zuzuführende Kühlerabluft Wasser eingespritzt wird, wenn ein überdurchschnittlich starker Brenngutanfall festgestellt wird. Diese Feststellung erfolgt durch Messung des Zustands der dem Ofen als Sekundärluft zuzuführenden Kühlerabluft, nämlich abhängig von Druck und/oder Temperatur derselben, die möglichst trägheitsfrei zu messen sind. Dadurch kann die Temperatur der Kühlerabluft schlagartig herabgesetzt werden. Voraussetzung dafür ist, daß die Verdampfungsenergie des Wassers der Kühlerabluft entnommen wird. Die Einspritzung soll also in der Weise geschehen, daß das Wasser nicht oder nur unwesentlich auf das zu kühlende Brenngut oder auf die Wände des vom Kühler zum Ofen führenden Kanals trifft.

Zwar ist es bekannt (US-A 3,162 431), Wasser in den Kühler einzuspritzen; jedoch geschieht dies, um den Feuchtigkeitsgehalt der Luft im Elektrofilter ständig zu erhöhen. Die Lufttemperatur soll ausdrücklich nicht dadurch abgesenkt werden.

Ferner ist es bekannt (FR-A 943 473), in einen Zement-Drehrohrofen Wasser oder gesättigten oder überhitzten Wasserdampf einzuführen, um eine lokale Überhitzung des Ofenprozesses zu verhindern, indem durch Dissoziation des Wasserdampfs an der betreffenden Stelle Wärme entzogen wird. Eine Einwirkung auf das thermische Schwingungsverhalten des aus Ofen und Kühler bestehenden Systems wird nicht angesprochen.

Die Wassereinspritzung geschieht zweckmäßigerweise im Kühlereinlaufbereich, also dort, wo das Brenngut vom Ofen im Kühler abgeworfen wird und die Kühlerabluft als Sekundärluft dem Ofen zugeführt wird, nachdem sie das Brenngutbett durchströmt hat.

Die Wassereinspritzung bewirkt zunächst eine Verminderung der Temperatur der Sekundärluft und damit auch eine Verringerung ihres Drucks. Der im Ofenkopf vorgesehene Druck (meist schwacher Unterdruck) kann in der Regel eingehalten werden, so daß Staubaustritt durch Anschlußspalte vermieden wird. Die Temperatur der Ofenflamme wird infolge der geringeren Temperatur und größeren Masse der Sekundärluft verringert. Es kann dadurch die Bildung von Brenngut mit im wesentlichen unverändertem Schmelzphasenanteil und damit ein gleichmäßiger Ofenaustrag bewirkt werden. Auch andere Ursachen, die sich destabilisierend auf den Ofenbetrieb auswirken können (beispielsweise Ansatzbildung), werden zurückgedrängt. Das gesamte Kühler-Ofen-System kann gleichmäßiger gefahren werden. Eine Brennstoffersparnis wird erzielt, die über 10% hinausgehen kann.

Erhöhte Sekundärlufttemperaturen, wie sie insbesondere bei Schwankungen des Betriebszustands auftreten, werden für einen Teil der schädlichen NOx-Bildung bei Zementofenanlagen verantwortlich gemacht. Auch in dieser Hinsicht schafft die Erfindung durch Begrenzung und Vergleichmäßigung der Sekundärlufttemperatur eine Verbesserung.

Die Anwendung der erfindungsgemäßen Wassereinspritzung zur Beherrschung instabiler Betriebszustände hindert nicht den ergänzenden, ggf. gleichzeitigen und gekoppelten Einsatz anderer Verfahren zur Stabilisierung des Kühler- und Ofenbetriebs, beispielsweise die Regelung der Flammenlänge oder die Steuerung der Luftverteilung über die Länge oder Breite des Rostkühlers.

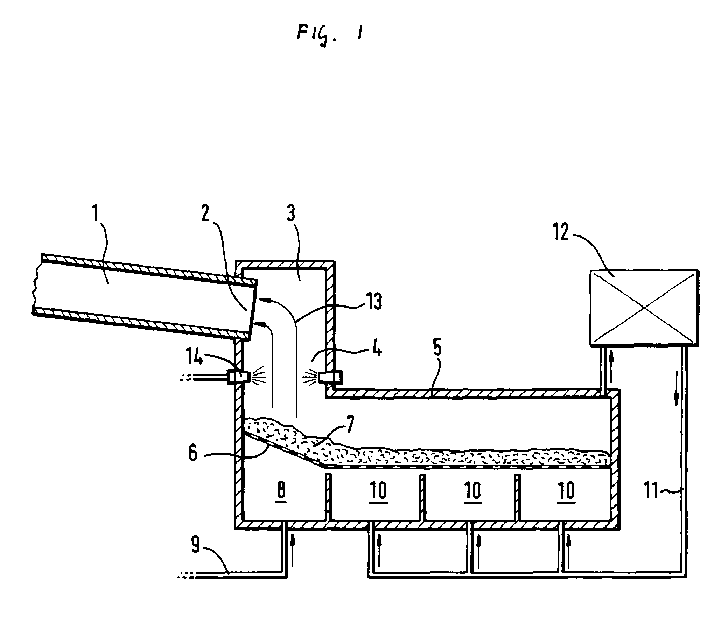

Die Erfindung wird im folgenden näher unter Bezugnahme auf die Zeichnung erläutert, die ein vorteilhaftes Ausführungsbeispiel in einer schematischen Darstellung zeigt.

Der Drehrohrofen 1 wird an seinem Abwurfende 2, das mit dem Ofenkopf 3 verbunden und diesem gegenüber hinreichend abgedichtet ist, in bekannter aber nicht dargestellter Weise befeuert. Das in dem Ofen 1 erbrannte Gut fällt im Einlaufbereich 4 des Kühlers 5 auf den Kühlerrost 6, auf dem es ein Bett 7 bildet, das von Kühlluft von unten nach oben durchströmt wird. Dem im Einlaufbereich des Kühlers befindlichen Kühlerabschnitt 8 wird Frischluft über die Leitung 9 zugeführt. Die übrigen Kühlerabschnitte 10 erhalten die Kühlluft über eine Leitung 11 von einem Wärmeaustauscher 12, dem der größte Teil der Kühlerabluft zugeführt wird. Die Differenz, nämlich vornehmlich die aus dem heißesten Abschnitt des Kühlers stammende Abluft, wird, wie durch Pfeile 13 angedeutet, als Sekundärluft dem Ofen 1 zugeführt. Im Einlaufbereich 4 befinden sich Düsen 14, aus denen Wasser in den Sekundärluftstrom 13 gesprüht werden kann. Dies geschieht in möglichst feiner Verteilung, um eine rasche Verdampfung des Wassers und damit eine rasche Rückwirkung auf die Temperatur und den Druck der Sekundärluft im Ofenkopf 3 zu erzielen.

Außer der Sekundärluftzuführung zum Ofen 1 ist normalerweise kein weiterer Abluftabzug zum Kühler 5 vorgesehen. Jedoch will die Erfindung nicht ausschließen, daß in solchen seltenen Fällen, in denen ein ungewöhnlich starker Ofenabwurf vorkommen könnte, für den die erfindungsgemäße Wassereinspritzung durch die Düsen 14 nicht ausgelegt ist, Notabzugseinrichtungen für Kühlerluft vorgesehen sind.

## Patentansprüche

1. Verfahren zum Dämpfen thermischer Schwingungen in einem aus einem Brennofen und einem luftgekühlten Brenngutkühler bestehenden System, in welchem das im Ofen anfallende Brenngut direkt dem Kühler und wenigstens ein Teil der Abluft des Kühlers dem Ofen direkt als Sekundärluft zugeführt wird, dadurch gekennzeichnet, daß in Abhängigkeit von der Temperatur und/oder dem Druck der dem Ofen zuzuführenden Kühlerabluft Wasser in diese eingespritzt wird.

2. Verfahren nach Anspruch 1, dadurch gekennzeichnet, daß die Wassereinspritzung im Kühlereinlaufbereich erfolgt.

3. Anordnung bestehend aus einem Rostkühler für Brenngut und einem unmittelbar vor dem Kühler (5) angeordneten Brennofen (1), dem wenigstens ein Teil der Kühlerabluft als Sekundärluft zuführbar ist, die eine Einrichtung zum Dämpfen von thermischen Schwingungen enthält, dadurch gekennzeichnet, daß die Einrichtung zum Dämpfen der thermischen Schwingungen von einer im Strömungsweg (13) der Kühlerabluft zum Brennofen (1) vorgesehenen Einrichtung (14) zum Einspritzen von Wasser in Abhängigkeit von Mitteln zur Messung von Temperatur und/oder Druck der Sekundärluft gebildet ist.

4. Anordnung nach Anspruch 3, dadurch gekennzeichnet, daß die Einrichtung (14) zum Einspritzen von Wasser im Einlaufbereich (4) des Kühlers (5) angeordnet ist.

5. Anordnung nach Anspruch 3 oder 4, dadurch gekennzeichnet, daß der Kühler - abgesehen von dem Sekundärluftabzug zum Ofen - im wesentlichen abluftfrei ausgebildet ist.

## Claims

1. A method for damping thermal oscillations in a system comprising a kiln and an air-cooled cooler for combustion material, in which the combustion material formed in the kiln is fed directly to the cooler and at least one portion of the exhaust air from the cooler is fed directly to the kiln as secondary air, characterised in that, depending on the temperature and/or the pressure of the cooler exhaust air to be fed to the kiln, water is injected therein.

2. A method according to Claim 1, characterised in that the injection of water is carried out in the cooler inlet zone.

3. An assembly comprising a grate cooler for combustion material, a kiln (1) which is disposed immediately in front of the cooler (5) and to which at least one portion of the cooler exhaust air can be fed as secondary air, which contains a device for damping thermal oscillations, characterised in that the device for damping thermal oscillations is formed by a device (14) provided in the flow path (13) of the cooler exhaust air to the kiln (1) for injecting water in response to means for measuring the temperature and/or pressure of the secondary air.

4. An assembly according to Claim 3, characterised in that the device (14) for injecting water is disposed in the inlet zone (4) of the cooler (5).

5. An assembly according to Claim 3 or 4, characterised in that, apart from the secondary air outlet to the kiln, the cooler is designed to be substantially free of exhaust air.

## Revendications

1. Procédé d'amortissement de fluctuations thermiques dans un système constitué d'un four de cuisson et d'un refroidisseur du produit de cuisson, refroidi à l'air, dans lequel le produit de cuisson se trouvant dans le four est directement acheminé vers le refroidisseur et au moins une partie de l'air évacué du refroidisseur est directement acheminée vers le four en tant qu'air secondaire, caractérisé en ce que de l'eau est injectée dans l'air évacué du refroidisseur et à acheminer vers le four, en fonction de la température et/ou de la pression de cet air.

2. Procédé selon la revendication 1, caractérisé en ce que l'injection d'eau s'effectue dans la zone d'entrée du refroidisseur.

3. Système constitué d'un refroidisseur à grille pour produit de cuisson et d'un four de cuisson (1) qui est disposé immédiatement devant le refroidisseur (5) et auquel peut être acheminée au moins une partie de l'air évacué du refroidisseur en tant qu'air secondaire, lequel système contient un dispositif pour l'amortissement de fluctuations thermiques, caractérisé en ce que le dispositif d'amortissement des fluctuations thermiques est constitué par un dispositif (14), prévu dans le parcours d'écoulement (13) de l'air évacué du refroidisseur en direction du four de cuisson (1), destiné à injecter de l'eau en fonction de moyens prévus pour mesurer la température et/ou la pression de l'air secondaire.

4. Système selon la revendication 3, caractérisé en ce que le dispositif (14) pour l'injection d'eau est disposé dans la zone d'entrée (4) du refroidisseur (5).

5. Système selon la revendication 3 ou 4, caractérisé en ce que le refroidisseur - à l'exception de l'extraction de l'air secondaire vers le four - est réalisé sensiblement sans air d'évacuation.
